# EUROPÄISCHE PATENTSCHRIFT

(11) **EP 3 942 179 B1**
(45) Veröffentlichungstag und Bekanntmachung des Hinweises auf die Patenterteilung: **06.03.2024**
(21) Anmeldenummer: 20712287.0
(22) Anmeldetag: 16.03.2020
(51) Int. Cl.: F03D 80/30

(54) **UNWETTERFRÜHWARNVERFAHREN UND UNWETTERFRÜHWARNVORRICHTUNG**
SEVERE WEATHER EARLY WARNING METHOD AND SEVERE WEATHER EARLY WARNING DEVICE
PROCÉDÉ D'AVERTISSEMENT PRÉCOCE D'INTEMPÉRIES ET DISPOSITIF D'AVERTISSEMENT PRÉCOCE D'INTEMPÉRIES

(30) Priorität: 18.03.2019 DE 102019106746
(43) Veröffentlichungstag der Anmeldung: 26.01.2022
(73) Patentinhaber: Wobben Properties GmbH, 26607 Aurich (DE)
(72) Erfinder: GROENHAGEN, Jannes, 26623 Südbrookmerland (DE)
(74) Vertreter: Eisenführ Speiser
(86) Internationale Anmeldenummer: PCT/EP2020/057091
(87) Internationale Veröffentlichungsnummer: WO 2020/187832

(56) Entgegenhaltungen:
- JP-A- 2007 100 571
- US-A1- 2012 287 549

## Beschreibung

Die vorliegende Erfindung betrifft ein Unwetterfrühwarnverfahren und eine Unwetterfrühwarnvorrichtung.

Ein Blitzschutzsystem ist bei modernen Windenergieanlagen aufgrund ihrer großen Höhe vorgeschrieben. Das Blitzschutzsystem soll dazu dienen, Blitze, welche in die Rotorblätter der Windenergieanlage einschlagen, abzuleiten, ohne dabei Komponenten der Windenergieanlage zu beschädigen.

Gemäß der Norm DIN EN 50536 müssen Servicemitarbeiter in einer Windenergieanlage alarmiert werden, falls ein Unwetter oder ein Gewitter herannaht. Gemäß den Vorschriften der Bundesgenossenschaft BG ETEM BGI 657 ist ein Arbeiten von Servicemitarbeitern an einer Windenergieanalage während eines Gewitters untersagt.

Somit muss ein Unwetterfrühwarnverfahren bzw. ein Unwetterfrühwarnsystem vorgesehen sein.

EP 1 282 775 B1 zeigt eine Windenergieanlage mit einem Rotorblatt und einem Blitzschutzsystem. Ferner ist eine Vorrichtung zur kontinuierlichen Entladung von elektrostatischen Ladungen an dem Rotorblatt vorgesehen. Damit soll eine elektrostatische Aufladung der Rotorblätter verhindert bzw. reduziert werden. Die elektrostatische Aufladung der Rotorblätter hängt von den Betriebsparametern der Windenergieanlage sowie von den Umwelteinflüssen in der Umgebung der Windenergieanlage ab.

In der prioritätsbegründenden deutschen Patentanmeldung hat das Deutsche Patent- und Markenamt die folgenden Dokumente recherchiert: JP 2007- 100 571 A, DE 10 2013 223 592 A1, EP 1 282 775 B1, DE 10 2018 100 789 A1, DE 10 2017 100 785 A1, US 2018/0 230 968 A1 und CN 204 595 247 U. Ein weiteres Dokument aus dem Stand der Technik ist US 2012/0287 549 A1.

Es ist eine Aufgabe der vorliegenden Erfindung, ein Unwetterfrühwarnverfahren vorzusehen, welches Servicemitarbeitern, welche sich in einer Windenergieanlage befinden, ausreichend Vorwarnzeit gibt, damit diese sich bei einem drohenden Gewitter aus der Windenergieanlage entfernen können.

Diese Aufgabe wird durch ein Unwetterfrühwarnverfahren nach Anspruch 1 und durch eine Unwetterfrühwarnvorrichtung nach Anspruch 4 gelöst.

Somit wird ein Unwetterfrühwarnverfahren vorgesehen. Eine elektrische Aufladung mindestens eines Rotorblattes einer Windenergieanlage wird erfasst. Die erfasste elektrostatische Aufladung oder eines von der elektrostatischen Aufladung abgeleiteten Parameters wird mit einem Grenzwert verglichen. Ein Warnsignal wird ausgegeben, wenn der Grenzwert überschritten wird. Damit kann ein Unwetterfrühwarnverfahren vorgesehen werden, ohne dass hierbei externe Daten benötigt werden. Mit anderen Worten, für das Unwetterfrühwarnverfahren werden lediglich diejenigen Daten analysiert, die innerhalb der Windenergieanlage erfasst werden können. Das Rotorblatt weist ein Blitzschutzsystem und eine Ableiteinheit auf. Über die Ableiteinheit erfolgt ein kontinuierliches Ableiten einer elektrostatischen Aufladung mindestens eines Rotorblattes einer Windenergieanlage. Der in der Ableiteinheit fließende Strom und/oder die dort vorhandene Spannung wird erfasst und mit Grenzwerten verglichen. Ein Warnsignal wird ausgegeben, wenn die Grenzwerte überschritten sind.

Gemäß einem Aspekt der vorliegenden Erfindung weist das Rotorblatt ein Blitzschutzsystem mit mindestens einem Blitzschutzleiter auf. Die durch den Blitzschutzleiter fließenden Ströme werden erfasst und mit Grenzwerten verglichen. Ein Warnsignal wird ausgegeben, wenn die Grenzwerte überschritten sind. Das Erfassen der durch den Blitzschutzleiter fließenden Ströme kann beispielsweise mittels eines Stromwandlers erfolgen.

Gemäß einem weiteren Aspekt der vorliegenden Erfindung wird eine Unwetterfrühwarnvorrichtung mit einer elektrostatischen Aufladung-Erfassungseinheit vorgesehen. Die elektrostatische Aufladungs-Erfassungseinheit ist dazu ausgestaltet, eine elektrostatische Aufladung eines Rotorblattes einer Windenergieanlage oder eines von der elektrostatischen Aufladung abgeleiteten Parameters zu erfassen. Eine Unwetterfrühwarneinheit vergleicht die erfasste elektrostatische Aufladung oder die von der elektrostatischen Aufladung abgeleiteten Parameter mit Grenzwerten und gibt ein Warnsignal aus, wenn der Grenzwert überschritten wird. Ferner ist eine Ableiteinheit als elektrostatische Aufladungs-Erfassungseinheit vorgesehen, welche mit dem Rotorblatt der Windenergieanlage koppelbar ist, um eine elektrostatische Aufladung des Rotorblattes kontinuierlich abzuleiten. Die Unwetterfrühwarneinheit ist mit der Ableiteinheit gekoppelt, um die in der Ableiteinheit fließenden Ströme und/oder die in der Ableiteinheit vorhandenen Spannungen zu erfassen und mit einem Grenzwert zu vergleichen. Ein Warnsignal wird ausgegeben, wenn der Grenzwert überschritten wird.

Gemäß einem weiteren Aspekt der vorliegenden Erfindung weist die Unwetterfrühwarnvorrichtung einen Stromwandler zur Erfassung von Strömen in einem Teil des Blitzschutzsystems auf. Die Unwetterfrühwarneinheit ist dazu ausgestaltet, die durch den Stromwandler erfassten Ströme mit mindestens einem Grenzwert zu vergleichen und ein Warnsignal auszugeben, wenn der Grenzwert überschritten wird.

Gemäß einem weiteren Aspekt der vorliegenden Erfindung ist die Unwetterfrühwarneinheit dazu ausgestaltet, einen zeitlichen Verlauf der erfassten Ströme und/oder Spannungen zu analysieren und mit Grenzwerten oder Grenzwertverläufen zu vergleichen und bei Bedarf ein Warnsignal auszugeben.

Die Erfindung betrifft ebenfalls die Verwendung eines Rotorblattes mit einem Blitzschutzsystem als Sensor für ein Unwetterfrühwarnverfahren.

Die Erfindung betrifft ebenfalls eine Windenergieanlage mit mindestens einem Rotorblatt, einem Blitzschutzsystem und einer oben beschriebenen Unwetterfrühwarnvorrichtung.

Somit wird ein Unwetterfrühwarnverfahren vorgesehen, welches eine Warnung vor einem sich nähernden Gewitter ausgeben kann. Dazu werden die Rotorblätter der Windenergieanlage als Sensoren verwendet. Mindestens ein Rotorblatt der Windenergieanlage ist mit einer Messeinheit gekoppelt, welche eine elektrostatische Aufladung des Rotorblattes bzw. einen Ableitstrom erfasst. Anhand der Aufladung bzw. anhand des Ableitstromes können Rückschlüsse über die elektrostatische Aufladung in der Umgebung der Windenergieanlage gezogen werden. Wenn ein Gewitter sich der Position der Windenergieanlage nähert, dann wird dies zu einer erhöhten elektrostatischen Aufladung führen, welche mittels der Messeinheit erfasst werden kann. Wenn die elektrostatische Aufladung einen Grenzwert überschreitet, kann eine Warnung an Servicemitarbeiter in der Windenergieanlage ausgegeben werden.

Gemäß einem Aspekt der vorliegenden Erfindung kann ein Strom durch einen Blitzschutzleiter in dem Blitzschutzsystem des Rotorblattes mittels eines Stromwandlers indirekt erfasst werden. Diese erfassten Ströme können dann ausgewertet werden, um Rückschlüsse auf eine statische Aufladung des Rotorblattes ziehen zu können und um ggf. eine Unwetterfrühwarnung ausgeben zu können.

Alternativ dazu kann die Warnung auch beispielsweise an eine zentrale Steuereinheit beispielsweise in einem SCADA System ausgegeben werden. Damit können nicht nur die Servicemitarbeiter in der Windenergieanlage, vorgewarnt werden, sondern die Gewitterwarnung kann auch in ein zentrales SCADA-System ausgegeben werden, so dass ggf. auf den Betrieb der Windenergieanlage falls benötigt eingewirkt werden kann.

Gemäß einem Aspekt der vorliegenden Erfindung kann eine galvanische Verbindung zwischen dem Rotorblatt und dem Rest der Windenergieanlage vorhanden sein, über welche die elektrostatischen Aufladungen des Rotorblattes abfließen können. Wenn der dadurch entstehende Strom gemessen wird, können Rückschlüsse auf die aktuelle elektrostatische Aufladung gezogen werden.

Gemäß einem Aspekt der vorliegenden Erfindung können die Gewitterwarnsignale auch an einen Wetterdienst weitergeleitet werden, um eine Unwetterwarnung herausgeben zu können.

Gemäß der Erfindung erfolgt eine Unwetterfrühwarnung durch das Erfassen einer elektrostatischen Aufladung der Rotorblätter der Windenergieanlage bzw. eine Überprüfung der Ableitströme, welche von den Rotorblättern der Windenergieanlage zu dem Rest der Windenergieanlage fließen. Damit sind die Rotorblätter einer Windenergieanlage als Sensoren für ein Unwetterfrühwarnverfahren bzw. Unwetterfrühwarnsystem vorgesehen.

Die Erfindung betrifft somit die Verwendung von Rotorblättern einer Windenergieanlage als Sensoren für ein Unwetterfrühwarnverfahren.

Die Erfindung betrifft eine Windenergieanlage mit einer Unwetterfrühwarnvorrichtung.

Die Erfindung macht sich den Effekt zu eigen, dass bei einer höheren elektrostatischen Aufladung der Rotorblätter eine Spannung über den Widerstand des Statikableiters ansteigt. Diese Spannung an dem Widerstand des Statikableiters kann überwacht werden. Falls ein Grenzwert überschritten wird, kann ein Warnsignal ausgegeben werden. Die elektrostatische Aufladung kann auch durch Erfassung des Stroms erfolgen, der durch die Blitzschutzleiter fließt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem Ausführungsbeispiel der Erfindung, und
- Fig. 2: zeigt eine schematische Darstellung eines Rotorblatts einer Windenergieanlage von Fig. 1 gemäß einem zweiten Ausführungsbeispiel.

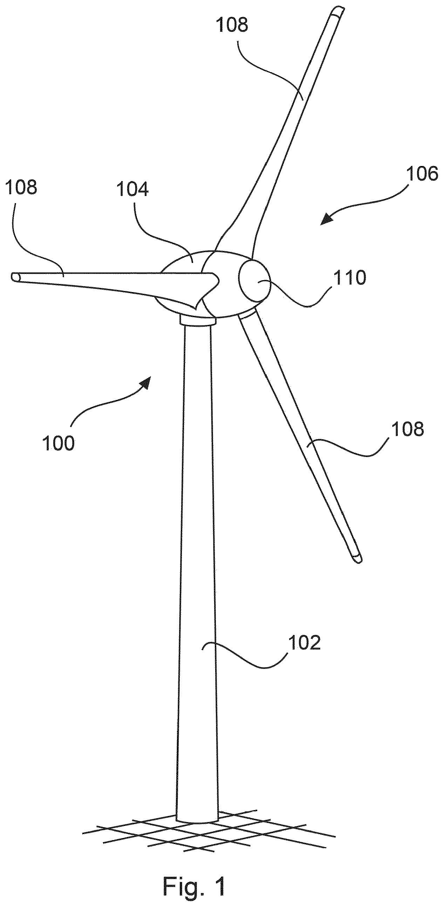

Fig. 1 zeigt eine schematische Darstellung einer Windenergieanlage gemäß einem Ausführungsbeispiel der Erfindung. Fig. 1 zeigt eine Windenergieanlage 100 mit einem Turm 102 und einer Gondel 104. An der Gondel 104 ist ein aerodynamischer Rotor 106 mit drei Rotorblättern 200 und einem Spinner 110 angeordnet. Der aerodynamische Rotor 106 wird im Betrieb der Windenergieanlage durch den Wind in eine Drehbewegung versetzt und treibt dadurch einen elektrischen Generator in der Gondel an.

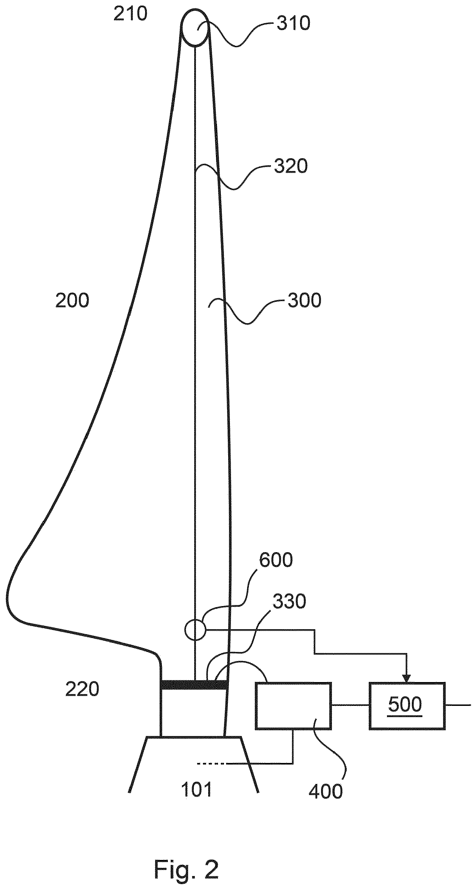

Fig. 2 zeigt eine schematische Darstellung eines Rotorblatts einer Windenergieanlage von Fig. 1 gemäß einem zweiten Ausführungsbeispiel. Das Rotorblatt 200 weist eine Rotorblattspitze 210 und eine Rotorblattwurzel 220 auf. Über die Rotorblattwurzel 220 ist das Rotorblatt 200 mit einer Nabe 101 der Windenergieanlage 100 gekoppelt. Das Rotorblatt 200 weist ein Blitzschutzsystem 300 beispielsweise mit einem Blitzrezeptor 310 im Bereich der Rotorblattspitze, einem Blitzschutzkabel oder Blitzschutzleiter 320 sowie optional einem Ableitring 330 im Bereich der Rotorblattwurzel 220 auf.

Im Bereich der Rotorblattwurzel 220 bzw. im Bereich der Nabe 101 kann optional eine Ableiteinheit 400 vorgesehen, mittels welcher eine elektrostatische Aufladung des Rotorblattes kontinuierlich abgeleitet werden kann. Die Ableiteinheit 400 kann beispielsweise wie in EP 1 282 775 B1 beschrieben ausgestaltet sein und kann damit zur kontinuierlichen Entladung der elektrostatischen Ladung der Rotorblätter eine Reihenschaltung eines ohmschen Widerstandes und einer Induktivität aufweisen. Während der statischen Entladung des Rotorblattes ist die Induktivität nicht in Funktion, da die Ableitströme einen Gleichstrom mit typischerweise sehr kleinen Amplituden darstellen. Die Ableitschaltung weist einen Widerstand (beispielsweise 50 kΩ) auf, über welchen die Ableitströme abgeleitet werden können, die aufgrund der statischen Aufladung des Rotorblattes entstehen können. Die Induktivität in der Ableitschaltung wird lediglich für den Fall eines Blitzeinschlags benötigt.

Alternativ oder zusätzlich zu der Ableiteinheit 400 kann ein Stromwandler 600 vorgesehen sein, der kontaktlos den Strom bestimmt, der durch den Leiter 320 fließt.

Eine Unwetterfrühwarneinheit 500 kann mit der Ableiteinheit 400 und/oder dem Stromwandler 600 gekoppelt werden und überwacht Ströme und/oder Spannungen in der Ableiteinheit 400 oder dem Stromwandler 600.

Die Funktion der Unwetterfrühwarneinheit 500 gemäß der Erfindung beruht auf der Erkenntnis, dass ein herannahendes Gewitter zu einer Steigerung der elektrostatischen Aufladung der Rotorblätter führt. Durch die in der Ableiteinheit 400 vorhandenen Ströme und Spannungen kann die elektrostatische Aufladung der Rotorblätter durch die Unwetterfrühwarneinheit 500 erfasst werden. Falls die Ströme und/oder Spannungen einen Grenzwert überschreiten, kann die Unwetterfrühwarneinheit 500 ein Warnsignal ausgeben.

Dieses Warnsignal kann beispielsweise in der Windenergieanlage wiedergegeben werden, insbesondere wenn sich Servicepersonal in der Windenergieanlage befindet. Damit kann sichergestellt werden, dass das Servicepersonal die Windenergieanlage verlässt, bevor das Unwetter die Windenergieanlage erreicht.

Mit der erfindungsgemäßen Unwetterfrühwarneinheit können somit die Anforderungen für den Arbeitsschutz für die Servicekräfte der Windenergieanlage erreicht werden.

Mit dem erfindungsgemäßen Unwetterfrühwarnsystem kann ferner erreicht werden, dass die Servicekräfte sich länger in der Windenergieanlage aufhalten können, auch wenn sich ein Unwetter in der Nähe der Windenergieanlage befindet. Mit dem erfindungsgemäßen Unwetterfrühwarnsystem (und insbesondere mit den gewählten Grenzwerten) kann sicher und effizient eine Unwetterfrühwarnung ausgegeben werden.

Das Frühwarnsignal der Unwetterfrühwarneinheit 500 kann ebenfalls an ein zentrales Steuersystem für alle Windenergieanlagen übermittelt werden. Ferner können optional die erfassten Strom- und Spannungswerte ebenfalls übertragen werden, so dass der Strom und/oder Spannungsanstieg erfasst und gespeichert werden kann. Diese Daten können ggf. zur Analyse und Verbesserung des Unwetterfrühwarnsystems verwendet werden.

Die Erfassung der Ströme und/oder Spannungen kann direkt oder indirekt erfolgen. Eine Strommessung kann beispielsweise kontaktlost erfolgen.

Gemäß einem Aspekt der vorliegenden Erfindung erfolgt eine Spannungsmessung der Spannung über die Widerstände in der Ableiteinheit 400. Alternativ dazu kann der durch die Ableiteinheit 400 fließende Strom erfasst werden.

Gemäß einem Aspekt der vorliegenden Erfindung kann durch Messung der Ströme und Spannungen in der Ableiteinheit oder durch Messung der Ströme in dem Blitzschutzsystem (und damit durch Erfassung der elektrostatischen Aufladung an den Rotorblättern der Windenergieanlage) ein Hinweis für ein herannahendes Gewitter bestimmt werden.

Gemäß einem weiteren Aspekt der vorliegenden Erfindung kann das Unwetterfrühwarnsignal auch zur Steuerung der Windenergieanlage verwendet werden. Wenn anhand des Unwetterfrühwarnsystems erfasst wird, dass ein Gewitter naht, dann kann in den Betrieb der Windenergieanlage eingegriffen werden und die Windenergieanlage kann notfalls zum Stillstand gebracht werden.

Die in der Ableiteinheit 400 fließenden Ströme und/oder Spannungen oder die durch den Stromwandler 600 ermittelten Ströme können zeitlich erfasst werden. Anschließend kann eine Analyse des zeitlichen Verlaufs der Spannungen und/oder Ströme durchgeführt werden, um eine verbesserte Unwetterwarnfrühwarnung ausgeben zu können.

Die Strommessung mittels des Stromwandlers 600 kann insbesondere kontaktlos erfolgen.

Gemäß einem weiteren Aspekt der vorliegenden Erfindung können mittels einer Lichtbogenerfassung Rückschlüsse auf eine statische Aufladung des Rotorblatts gezogen werden.

Die Spektren der erfassten Spannungen und/oder Ströme in der Ableitbox oder durch den Stromwandler können zur Analyse und Unwetterfrühwarnung herangezogen werden.

## Patentansprüche

1. Unwetterfrühwarnverfahren, mit den Schritten:
Erfassung einer elektrostatischen Aufladung mindestens eines Rotorblattes (200) einer Windenergieanlage (100) oder eines von der elektrostatischen Aufladung abgeleiteten Parameters,
Vergleichen der erfassten elektrostatischen Aufladung oder des von der elektrostatischen Aufladung abgeleiteten Parameters mit einem Grenzwert, und
Ausgeben eines Warnsignals, wenn der Grenzwert überschritten wird,
wobei das Rotorblatt (200) ein Blitzschutzsystem (300) und eine Ableiteinheit (400) aufweist, ferner mit den Schritten:
kontinuierliches Ableiten einer elektrostatischen Aufladung mindestens eines Rotorblattes (200) einer Windenergieanlage (100) über die Ableiteinheit (400), und
Erfassen der in der Ableiteinheit (400) fließenden Ströme und/oder der dort vorhandenen Spannung, und
Vergleichen der erfassten Ströme und/oder Spannungen mit Grenzwerten und Ausgeben eines Warnsignals, wenn die Grenzwerte überschritten sind.

2. Unwetterfrühwarnverfahren nach Anspruch 1, wobei das Rotorblatt (200) ein Blitzschutzsystem (300) mit mindestens einem Blitzschutzleiter (320) aufweist, mit den Schritten:
Erfassen der durch den Blitzschutzleiter (320) fließenden Ströme, und
Vergleichen der erfassten Ströme mit Grenzwerten und Ausgeben eines Warnsignals, wenn die Grenzwerte überschritten sind.

3. Unwetterfrühwarnvorrichtung, mit
einer elektrostatischen Aufladung-Erfassungseinheit, die dazu ausgestaltet ist, eine elektrostatische Aufladung eines Rotorblattes (200) einer Windenergieanlage (100) zu erfassen,
einer Unwetterfrühwarneinheit (500), welche dazu ausgestaltet ist, mittels der Auflade-Erfassungseinheit erfasste elektrostatische Aufladung oder des davon abgeleiteten Parameters mit mindestens einem Grenzwert zu vergleichen und ein Warnsignal auszugeben, wenn der Grenzwert überschritten wird, **gekennzeichnet durch**
eine Ableiteinheit (400) als Aufladungs-Erfassungseinheit, welche mit mindestens einem Rotorblatt (200) einer Windenergieanlage (100) koppelbar ist, um eine elektrostatische Aufladung des Rotorblattes (200) kontinuierlich abzuleiten, und
eine Unwetterfrühwarneinheit (500), welche mit der Ableiteinheit (400) gekoppelt ist und die in der Ableiteinheit (400) fließenden Ströme und/oder die in der Ableiteinheit vorhandenen Spannungen erfasst und mit einem Grenzwert vergleicht und ein Warnsignal ausgibt, wenn der Grenzwert überschritten wird.

4. Unwetterfrühwarnvorrichtung nach Anspruch 3, ferner mit
mindestens einem Stromwandler (600) zur Erfassung von Strömen in einem Teil des Blitzschutzsystems (300) als elektrostatische Auflade-Erfassungseinheit,
wobei die Unwetterfrühwarneinheit (500) dazu ausgestaltet ist, die durch den Stromwandler erfassten Ströme mit mindestens einem Grenzwert zu vergleichen und ein Warnsignal auszugeben, wenn der Grenzwert überschritten wird.

5. Unwetterfrühwarnvorrichtung nach einem der Ansprüche 3 bis 4, wobei
die Unwetterfrühwarneinheit (500) dazu ausgestaltet ist, einen zeitlichen Verlauf der erfassten Ströme und/oder Spannungen zu analysieren und mit Grenzwerten oder Grenzwertverläufen zu vergleichen und ein Warnsignal bei Bedarf auszugeben.

6. Verwendung eines Rotorblattes (200) mit einem Blitzschutzsystem (300) als Sensor für ein Unwetterfrühwarnverfahren,
wobei die elektrostatische Aufladung der Rotorblätter (200) oder eines von der elektrostatischen Aufladung abgeleiteten Parameters erfasst und mit einem Grenzwert verglichen wird,
wobei ein Warnsignal ausgegeben wird, wenn der Grenzwert überschritten wird,
wobei ein kontinuierliches Ableiten einer elektrostatischen Aufladung mindestens eines Rotorblattes (200) einer Windenergieanlage (100) über die Ableiteinheit (400) erfolgt, und
wobei ein Erfassen der in der Ableiteinheit (400) fließenden Ströme und/oder der dort vorhandenen Spannung erfolgt, und
wobei ein Vergleichen der erfassten Ströme und/oder Spannungen mit Grenzwerten und Ausgeben eines Warnsignals erfolgt, wenn die Grenzwerte überschritten sind.

7. Windenergieanlage, mit
mindestens einem Rotorblatt (200),
einem Blitzschutzsystem (300) und
einer Unwetterfrühwarnvorrichtung nach einem der Ansprüche 3 bis 5.

## Claims

1. Severe weather early warning method, comprising the steps:
detecting an electrostatic charge of at least one rotor blade (200) of a wind turbine (100) or a parameter derived from the electrostatic charge,
comparing the detected electrostatic charge or the parameter derived from the electrostatic charge with a limit value, and
outputting a warning signal if the limit value is exceeded,
wherein the rotor blade (200) comprises a lightning protection system (300) and a discharge unit (400), further comprising the steps of
continuously discharging of an electrostatic charge of at least one rotor blade (200) of a wind turbine (100) via the discharge unit (400), and
detecting the currents flowing in the discharge unit (400) and/or the voltage present therein, and
comparing the detected currents and/or voltages with limit values and outputting a warning signal if the limit values are exceeded.

2. Severe weather early warning method according to claim 1, wherein the rotor blade (200) comprises a lightning protection system (300) with at least one lightning protection conductor (320), comprising the steps of:
detecting the currents flowing through the lightning conductor (320), and
comparing the recorded currents with limit values and outputting a warning signal if the limit values are exceeded.

3. Severe weather early warning device, with
an electrostatic charge detection unit which is configured to detect an electrostatic charge on a rotor blade (200) of a wind turbine (100),
a severe weather early warning unit (500) which is configured to compare electrostatic charge detected by means of the charge detection unit or the parameter derived therefrom with at least one limit value and to output a warning signal if the limit value is exceeded, **characterised by**
a discharge unit (400) as a charge detection unit which can be coupled to at least one rotor blade (200) of a wind turbine (100) in order to continuously discharge an electrostatic charge from the rotor blade (200), and
a severe weather early warning unit (500), which is coupled to the discharge unit (400) and detects the currents flowing in the discharge unit (400) and/or the voltages present in the discharge unit and compares them with a limit value and outputs a warning signal if the limit value is exceeded.

4. Severe weather early warning device according to claim 3, further comprising
at least one current transformer (600) for detecting currents in a part of the lightning protection system (300) as an electrostatic charge detection unit,
wherein the severe weather early warning unit (500) is configured to compare the currents detected by the current transformer with at least one limit value and to output a warning signal if the limit value is exceeded.

5. Severe weather early warning device according to any one of claims 3 to 4, wherein
the severe weather early warning unit (500) is configured to analyse a time curve of the detected currents and/or voltages and to compare it with limit values or limit value curves and to output a warning signal if required.

6. Use of a rotor blade (200) with a lightning protection system (300) as a sensor for a severe weather early warning system,
wherein the electrostatic charge of the rotor blades (200) or a parameter derived from the electrostatic charge is detected and compared with a limit value,
wherein a warning signal is issued if the limit value is exceeded,
wherein an electrostatic charge of at least one rotor blade (200) of a wind turbine (100) is continuously discharged via the discharge unit (400), and
wherein the currents flowing in the discharge unit (400) and/or the voltage present therein are detected, and
whereby the detected currents and/or voltages are compared with limit values and a warning signal is outputted if the limit values are exceeded.

7. Wind turbine, with
at least one rotor blade (200),
a lightning protection system (300) and
a severe weather early warning device according to one of claims 3 to 5.

## Revendications

1. Procédé d'avertissement précoce d'intempéries présentant les étapes suivantes :
la détection d'une charge électrostatique au moins d'une pale de rotor (200) d'une éolienne (100) ou d'un paramètre dérivé de la charge électrostatique,
la comparaison de la charge électrostatique détectée ou du paramètre dérivé de la charge électrostatique avec une valeur limite, et
l'émission d'un signal d'avertissement lorsque la valeur limite est dépassée,
dans lequel la pale de rotor (200) présente un système de protection contre la foudre (300) et une unité de dérivation (400), de plus présentant les étapes suivantes :
la dérivation continue d'une charge électrostatique au moins d'une pale de rotor (200) d'une éolienne (100) par le biais de l'unité de dérivation (400), et
la détection des courants circulant dans l'unité de dérivation (400) et/ou de la tension qui y est présente et
la comparaison des courants détectés et/ou tensions avec des valeurs limites et l'émission d'un signal d'avertissement lorsque les valeurs limites sont dépassées.

2. Procédé d'avertissement précoce d'intempéries selon la revendication 1, dans lequel la pale de rotor (200) présente un système de protection contre la foudre (300) avec au moins un conducteur de protection contre la foudre (320), présentant les étapes suivantes :
la détection des courants circulant par le conducteur de protection contre la foudre (320), et
la comparaison des courants détectés avec des valeurs limites et l'émission d'un signal d'avertissement lorsque les valeurs limites sont dépassées.

3. Dispositif d'avertissement précoce d'intempéries avec
une unité de détection de charge électrostatique qui est configurée afin de détecter une charge électrostatique d'une pale de rotor (200) d'une éolienne (100),
une unité d'avertissement précoce d'intempéries (500) qui est configurée afin de comparer la charge électrostatique détectée au moyen de l'unité de détection de charge ou le paramètre dérivé de celle-ci avec au moins une valeur limite et d'émettre un signal d'avertissement lorsque la valeur limite est dépassée, **caractérisé par** une unité de dérivation (400) comme unité de détection de charge qui peut être couplée à au moins une pale de rotor (200) d'une éolienne (100) afin de dériver en continu une charge électrostatique de la pale de rotor (200), et
une unité d'avertissement précoce d'intempéries (500) qui est couplée à l'unité de dérivation (400) et détecte les courants s'écoulant dans l'unité de dérivation (400) et/ou les tensions présentes dans l'unité de dérivation et les compare avec une valeur limite et émet un signal d'avertissement lorsque la valeur limite est dépassée.

4. Dispositif d'avertissement précoce d'intempéries selon la revendication 3, de plus présentant
au moins un convertisseur de courant (600) pour la détection de courants dans une partie du système de protection contre la foudre (300) comme unité de détection de charge électrostatique,
dans lequel l'unité d'avertissement précoce d'intempéries (500) est configurée afin de comparer les courants détectés par le convertisseur de courant avec au moins une valeur limite et émettre un signal d'avertissement lorsque la valeur limite est dépassée.

5. Dispositif d'avertissement précoce d'intempéries selon l'une quelconque des revendications 3 à 4, dans lequel
l'unité d'avertissement précoce d'intempéries (500) est configurée afin d'analyser une étendue temporelle des courants détectés et/ou tensions et de la comparer avec des valeurs limites ou étendues de valeur limite et émettre un signal si besoin.

6. Utilisation d'une pale de rotor (200) avec un système de protection contre la foudre (300) comme capteur pour un procédé d'avertissement précoce d'intempéries,
dans laquelle la charge électrostatique des pales de rotor (200) ou un paramètre dérivé de la charge électrostatique est détecté et est comparé avec une valeur limite,
dans laquelle un signal d'avertissement est émis lorsque la valeur limite est dépassée,
dans laquelle une dérivation continue d'une charge électrostatique au moins d'une pale de rotor (200) d'une éolienne (100) est effectuée par le biais de l'unité de dérivation (400), et
dans laquelle une détection des courants circulant dans l'unité de dérivation (400) et/ou de la tension qui y est présente est effectuée, et
dans laquelle une comparaison des courants détectés et/ou tensions avec des valeurs limites et l'émission d'un signal d'avertissement sont effectués lorsque les valeurs limites sont dépassées.

7. Eolienne avec
au moins une pale de rotor (200),
un système de protection contre la foudre (300) et
un dispositif d'avertissement précoce d'intempéries selon l'une quelconque des revendications 3 à 5.
